# EUROPEAN PATENT APPLICATION

(11) **EP 4 497 645 A1**
(43) Date of publication of application: **29.01.2025**
(21) Application number: 23188152.5
(22) Date of filing: 27.07.2023
(51) Int. Cl.: B60W 50/02, B60W 50/029, B60W 60/00, B60W 50/04

(54) **VEHICLE, APPARATUS, COMPUTER PROGRAM, AND METHOD FOR AN AUTONOMOUS OR ASSISTED DRIVING SYSTEM**

(71) Applicant: Elektrobit Automotive GmbH, 91058 Erlangen (DE)
(72) Inventor: Asemann, Peter, 81739 München (DE)
(74) Representative: Continental Corporation

(57) **Abstract**

The invention relates to a vehicle, an apparatus, a computer program, and a method (100) for an autonomous or assisted driving system (212), ADS, for a vehicle. The method (100) comprises obtaining (110) information on an environment of the vehicle (210); obtaining (120), from the information on the environment, information on at least one possible emergency halt; determining (130) a failure of the ADS (212); and providing (140), in response to the failure of the ADS (212), the information on the emergency halt for stopping the vehicle (210) based on the information on the emergency halt.

## Description

Embodiments of the present disclosure relate to a vehicle, an apparatus, a computer program, and method for an autonomous or assisted driving system (ADS). In particular, embodiments relate to a concept for an emergency halt of a vehicle in case of a failure of an ADS.

ADS plays an increasingly important role in automotive applications.

In practice, the capability of an ADS to detect the vehicle's environment may be lost (e.g., mud covering multiple sensors at once, heavy fog, smoke, unexpected hardware failure), so that the ADS can no longer maneuver the vehicle safely. In some situations, there's no time for the driver to safely take over steering. Hence, the loss of the capability to sense the environment may be hazardous.

So, there may be a demand for an improved concept for an ADS.

This demand may be satisfied by the subject-matter of the appended independent claims. Advantageous embodiments are addressed in the appended dependent claims.

Embodiments of the present disclosure provide a method for an ADS for a vehicle. The method comprises obtaining information on an environment of the vehicle as well as obtaining from the information on the environment, information on at least one possible emergency halt. Further, the method comprises determining a failure of the ADS and providing, in response to the failure of the ADS, the information on the emergency halt for stopping the vehicle based on the information on the emergency halt. In doing so, the vehicle can be stopped safely even in case of a failure of the ADS.

In practice, the information on the environment may comprise sensor data, vehicular communication data from one or more other vehicles and/or infrastructure in the environment, and/or a map of the environment.

The failure of the ADS may comprise a failure of one or more sensors of the vehicle, and/or of other hardware of the ADS.

In some embodiments, the method further comprises using sensor data of one or more remaining properly working sensors for executing the emergency halt or deviating from the emergency halt according to the information on the emergency halt to avoid risks indicated by the sensor data of the remaining properly working sensors.

In some embodiments, the information on the emergency halt comprises at least one trajectory for the vehicle to an end location for the emergency halt. This allows the vehicle to reach the end location for the emergency halt by following the trajectory. In this way, no further information on the environment may be required. So, the vehicle can reach the end location even though no further information on the environment is received, e.g., because of the above failure.

Optionally, the information on the emergency halt comprises a plurality of trajectories for the vehicle from a regular driving path to the location for the emergency halt. This provides multiple options to perform a desired emergency halt for an increased flexibility. In practice, this, e.g., allows the vehicle to take another trajectory if it missed a previous one. The vehicle, e.g., can take a second, a third or any other subsequent trajectory for the emergency halt if it missed/passed a previous first trajectory on the regular driving path (e.g., because it had not enough time to react to the failure to take the first trajectory).

In some embodiments, a distance between start points of the trajectories on the regular driving path may be equal to or less than a predefined distance. In practice, the predefined distance is such that the vehicle taking the subsequent trajectory reacts fast enough to the failure to avoid a crash or any other damage or risk. To this end, the distance may depend on a vehicle speed/velocity of the vehicle, a distance of the vehicle to other vehicles, and/or any other information on or parameters of a current traffic situation. E.g., the distance may be shorter for a shorter distance to other vehicles and/or for a slower speed/velocity.

In some embodiments, information on the emergency halt comprises information on a plurality of possible emergency halts. So, the information on the emergency halt may indicate a number of options to stop the vehicle. In practice, the information, e.g., indicates various locations where the vehicle may be stopped. In this way, a flexibility is increased.

Optionally, the information on the plurality of possible emergency halts comprises information on a respective risk of the emergency halts. In practice, this allows a risk assessment to reduce a risk for the vehicle and/or other traffic participants.

Accordingly, the method may further comprise selecting one out of the plurality of possible emergency halts for stopping the vehicle from the plurality of possible emergency halts based on the information on their risk. In practice, the vehicle, e.g., selects an option, i.e., the emergency halt exhibiting the lowest or at least an acceptable (lower than a predefined threshold) risk. In this way, the safety may be improved.

In practice, the information on the risk may comprise information on a risk for maneuvering to an end location of a respective emergency halt and/or information on a risk of a collision after stopping the vehicle at the end location.

In some embodiments, providing the information comprises providing the information on the emergency halt to a control system which is separate from the ADS and configured for maneuvering the vehicle. In some examples, the information on the emergency halt, e.g., is provided to another redundant ADS and/or a powertrain of the vehicle. In this way, the vehicle can execute the emergency halt even if the ADS is not able to maneuver the vehicle anymore (due to the failure).

A skilled person having benefit from the present disclosure will appreciate that some or each step of the method may be executed using a computer or any other programmable hardware. So, embodiments of the method may be implemented as computer-implemented method. Accordingly, the method may be implemented as a computer program.

Accordingly, embodiments of the present disclosure provide a computer program comprising instructions which, when the computer program is executed by a computer, cause the computer to carry out a method of the present disclosure.

Further embodiments of the present disclosure provide an apparatus for an ADS. The apparatus comprises one or more interfaces for communication and a data processing circuit configured to execute the method of the present disclosure.

In practice, the apparatus may be installed on a vehicle. Accordingly, embodiments of the present disclosure may provide a vehicle comprising an apparatus according to the present disclosure.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

- Fig. 1: shows a flow chart schematically illustrating an embodiment of a method for an ADS;
- Fig. 2: schematically illustrates an exemplary use case of the proposed approach; and
- Fig. 3: shows a block diagram schematically illustrating an embodiment of an embodiment of an apparatus according to the present approach.

Detailed description of the drawings

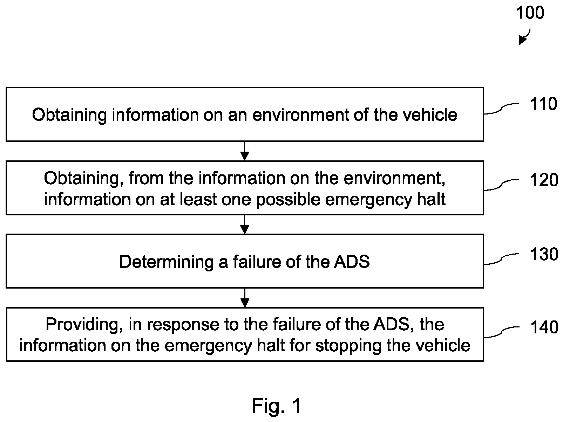

Fig. 1 shows a flow chart schematically illustrating an embodiment of a method 100 for an ADS for a vehicle. In context of the present disclosure, the ADS may represent any kind of ADS of any level of autonomous/assisted driving. In particular, the ADS may be suitable for any kind of vehicle.

As can be seen from the flow chart, the method 100 provides for obtaining 110 information on an environment of the vehicle. To this end, the vehicle or the ADS may be equipped with an environmental sensor configured to capture or record the environment. In embodiments, the environmental sensor, e.g., is a radar sensor, a lidar sensor, a camera, or the like. In some embodiments, also a combination of such sensors may be applied. So, the information on the environment may be indicative of any sensor data, e.g., camera images, lidar data, radar data, and/or the like. As well, the information on the environment may be indicative of information communicated with separate entities, e.g., with other traffic participants or infrastructure. In practice, the information on the environment, e.g., is indicative of messages such as Cooperative Awareness Messages (CAMs) or Collective Perception Messages (CPMs). For this, the vehicle or the ADS may be equipped with one or more appropriate communication interfaces for communication with other traffic participants (e.g., other vehicles) or infrastructure. Additionally, or alternatively, the information on the environment may be at least partly obtained from a map of the environment. So, the information on the environment may be also indicative of map data.

In assisted or autonomous driving, the vehicle may rely on such information on the environment to maneuver (safely), e.g., to follow roads and avoid collisions with objects in the surrounding, and assist a driver of the vehicle, respectively. However, for some reason, the environmental sensor, the communication interfaces, other hardware, and/or software may fail. In practice, they may fail due to a technical failure and/or due to an external influence, as described above. So, the vehicle may be unable to collect and/or process further information on the environment. Therefore, the ADS may be unable to maneuver the vehicle or to assist the driver reliably.

For this, method 100 provides for further steps including obtaining 120, from the information on the environment, information on at least one possible emergency halt. For this, the information on the possible emergency halt, e.g., is obtained from the information on the environment which already has been collected, e.g., prior to the failure. To this end, the vehicle or ADS may precautionary obtain the information on the emergency halt based on available information on the environment. In doing so, the information on the emergency halt may be continuously obtained during operation, e.g., when driving.

In practice, the information on the emergency halt may comprise information on at least one option for the vehicle to come to a halt. For this, the information on the possible emergency halt may indicate at least one location where the vehicle can come to a halt and how the vehicle could get there, i.e., how the vehicle may maneuver to get to the location for the emergency halt, as laid out in more detail later.

Method 100 further provides for determining 130 a failure of the ADS. For this, the ADS or the vehicle may be configured to identify the failure. In doing so, it may be particularly obtained whether and what kind of failure occurred. For this, e.g., the ADS is configured to provide information indicating that and/or which failure occurred. Accordingly, the ADS or the vehicle may be configured to receive and process this information to determine if an emergency halt is reasonable or even necessary in response to the failure. In doing so, it may be refrained from an emergency halt in case of a minor failure where the vehicle can still maneuver safely. However, in case of major failures an emergency halt may be reasonable or necessary.

So, method 100 suggests providing 140, in response to the failure of the ADS, the information on the emergency halt for stopping the vehicle based on the information on the emergency halt. In doing so, the information on the emergency halt is made available for the vehicle to perform the emergency halt. In this way, the vehicle may be brought in a safe state in case of failures of the ADS.

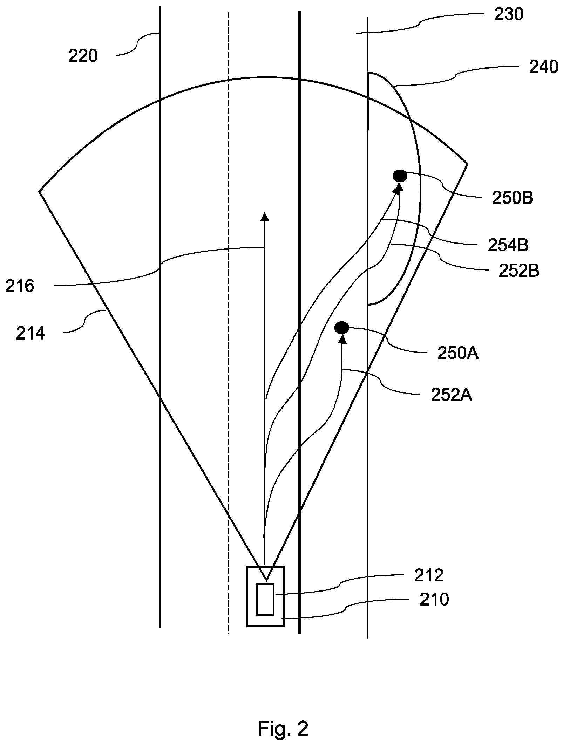

More details of the proposed approach are laid out in more detail below with reference to Fig. 2 schematically illustrating an exemplary use case of the proposed approach.

As can be seen, Fig. 2 refers to an exemplary traffic scenario. In the present exemplary traffic scenario, a vehicle 210 drives down a road 220. The vehicle 210 is equipped with an ADS 212. The ADS 212 comprises one or more environmental sensors to capture the environment of the vehicle 210 in their field of view 214. In this way, the ADS 212 collects sensor data of the environment including the road 220 as well as an emergency lane 230 and an emergency bay 240 for vehicles.

According to the proposed approach, the ADS 212 (continuously or repeatedly) evaluates possible options for an emergency halt from the sensor data and/or map data. In doing so, it, e.g., determines halting positions for the vehicle 210 in case an emergency halt (used synonymously with emergency stop or emergency brake in the present context) will be required because of a failure, e.g., a "loss" of sensors, and obtains respective information on possible emergency halts.

In practice, a default halting position or default rule for a halting position may be predefined. E.g., such a default halting position may be (in right-hand traffic) as far as possible on the right side of a lane, possibly on an emergency lane or open space with no traffic. If no such position can be found, slowing down in the actual lane until stop could be a fallback.

In real use cases, the proposed approach may be particularly helpful for executing or initiating emergency halts before the driver of the vehicle may be able to react to the failure of the ADS. So, possible halting positions or locations which can be reached within the time it would take for the driver to take over control again may be obtained.

As can be seen from Fig. 2, according to the proposed approach, the information on the emergency halt comprises information on a plurality of possible emergency halts. In particular, the information on the emergency halts may indicate where the vehicle is supposed to come to a halt, i.e., an end location for the emergency halt.

In the present exemplary use case, e.g., a first halting location 250A, a first "halting position candidate", on the emergency lane 230 and a second halting position 250B, a second "halting position candidate", in the emergency bay 240 may be obtained from the sensor data of the ADS 212 and/or map data.

Optionally, the information on the emergency halt comprises wherein the information on the plurality of possible emergency halts comprises information on a respective risk of the emergency halts. To this end, for each halting position candidate/option, a (overall) risk of using that halting position may be calculated. In embodiments, the risk may be indicative of a risk of a collision with another traffic participant. According to some embodiments of the present disclosure, the risk may be indicative of a combination of a risk of such a collision after halting and a risk driving to that position in consideration of the impaired ADS 212, e.g., with reduced or no sensor vision. For the risk after halting, statistical values can be pre-programmed. As the skilled person will understand, different locations in the traffic environment may pose a different risk of an accident. Accordingly, the risk after halting may depend on a traffic situation and/or where the halting position candidate is located. The risk after halting, e.g., on the emergency lane 230 may be lower than for halting on a driving lane and halting on in the emergency bay 240 may be even lower as it is less frequently used by any other traffic participants. Accordingly, a risk for various locations may be pre-programmed, e.g., of stopping on the Autobahn with no speed limit in the left lane or any other road or motorway that is busy and/or has no speed limit, risk of stopping on the emergence lane on a highway, risk of stopping on a rural street behind a hill, and/or the like. In the present example, e.g., the risk of the first halting location 250A on the emergency lane 230 after halting may be higher than for the second halting location 250B in the emergency bay 240. The statistical values used to obtain the risk of different halting positions, e.g., may be obtained from statistics indicating how likely accidents occur for different traffic situations and/or different locations.

As well, the information on the emergency halt may comprise at least one trajectory for the vehicle to an end location for the emergency halt. Accordingly, the information on the emergency halt is indicative of a trajectory 252A of the vehicle to the first halting location 250A. Optionally, also a plurality of trajectories may be obtained for a single halting location. In the present use case, e.g., a first trajectory 252B and a second trajectory 254B to reach the second halting location 250B may be obtained and indicated by or included in the information on the emergency halt. To this end, the trajectories may be calculated based a prediction of corridors of free space in the traffic surrounding the vehicle in consideration of the sensor data, which again are based on the movement of the surrounding vehicles (not shown). The skilled person will understand that the trajectories 252A, 252B, 254B may pose a different risk for the vehicle 210 to get to the halting locations 250A and 250B. The risk of getting to the halting locations 250A and 250B may depend on the traffic situations as well as on an accuracy of the sensor data at a respective trajectory. In practice, there might be rather "stable" gaps, e.g., between trucks, or there might be a congested fast lane between the vehicle 210 and the halting locations 250A and 250B with no gaps or variable gaps. Also, the road 220 might be almost empty with no cars following up, so any trajectory to the right side of the lane would be safe in the next seconds. So, the risk of the trajectory may depend on a traffic density, a gap between traffic participants and/or a (average, maximum) speed of other traffic participants where a respective trajectory runs (e.g., for a lane crossed by the respective trajectory). Values of such criteria, e.g., are obtained from the sensor data and/or from a communication with other vehicles.

In embodiments of the present approach, then, the halting location and the trajectory prosing the lowest combined risk may be selected for the emergency halt. As indicated by Fig. 2, the trajectories may be indicative of a path for the vehicle from a regular driving path to the location for the emergency halt, i.e., the halting location. In the present example, the trajectories start from respective points on an actual driving lane of the vehicle, here, e.g., from an actual planned trajectory 216, to the respective halting location. In practice, the trajectories can be such that from each point on the planned trajectory 216 of the vehicle 210 from which the safe halting location can still be reached with safe or doable steering/braking maneuvers, or at least a set from a sufficient number of points (every few meters, the position reached every few milliseconds) to be able to start taking a trajectory almost the moment a failure occurs. For this, a distance between start points of the trajectories on the regular driving path, e.g., the actually planned trajectory 216, is equal or less than a predefined distance. To make sure that, the vehicle 210 can react sufficiently fast, e.g., before an accident may happen, the predefined distance may depend on a traffic situation, in particular, on a traffic density, a distance to other traffic participants, and/or a speed of the vehicle 210. For this, the traffic density and/or the distance may be obtained from the information on the environment.

It should be noted that although the proposed approach is only explained for a specific number of halting locations and trajectories, the proposed approach can be also applied for an arbitrary number of halting locations and trajectories.

As the skilled person will appreciate, the proposed approach provides that the vehicle 210 is prepared to react flexibly, safely, and quickly to a failure of the ADS 212. In particular, the proposed approach allows a controlled emergency halt providing more safety compared to other concepts suggesting an uncontrolled emergency brake where the vehicle just brakes without further maneuvers and without any consideration of the surrounding.

For the controlled emergency halt, the trajectories to safe halting locations 250A and 250B can be provided to maneuver the vehicle 210 to a safe state. The skilled person will understand that, for this, the trajectories may be provided to any appropriate system configured to maneuver the vehicle 210 based on the trajectories. In some embodiments, a separate redundant system may be deployed for this purpose. In examples, e.g., an additional redundant autonomous driving subsystem (not shown) may be deployed in addition to the ADS 212, which can take over if the ADS 212 fails. So, in case the ADS 212 fails, the subsystem may use its knowledge/information about an actual position of the vehicle (e.g., obtained using a global positioning system, GPS), a trajectory from the set of trajectories from the actual vehicle position, and optionally some means of inertial guidance (i.e., steering angle, wheel rotations) to drive the vehicle 210 to the next or desired safe halting location.

The proposed approach may be implemented in a computer program. Accordingly, the proposed method may be applied as computer-implemented method, in practice. In embodiments, the proposed approach, e.g., is implemented in a computer program for an ADS. As well, the proposed approach may be executed outside of the ADS, e.g., using a data processing circuit (of the vehicle) separate from the ADS.

So, embodiments of the present approach may be implemented in any apparatus for an ADS, e.g., as a component of the ADS or a separate data processing circuit serving the ADS.

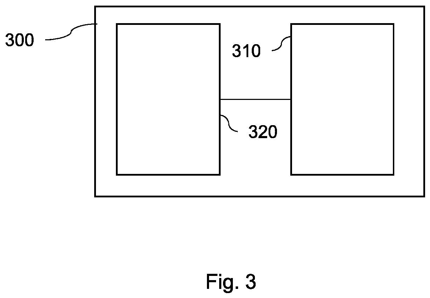

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signals or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is part or a component of the ADS.

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for an autonomous or assisted driving system (212), ADS, for a vehicle, the method (100) comprising:
obtaining (110) information on an environment of the vehicle (210);
obtaining (120), from the information on the environment, information on at least one possible emergency halt;
determining (130) a failure of the ADS (212); and
providing (140), in response to the failure of the ADS (212), the information on the emergency halt for stopping the vehicle (210) based on the information on the emergency halt.

2. The method (100) of claim 1, wherein the information on the environment comprises sensor data, vehicular communication data from one or more other vehicles and/or infrastructure in the environment, and/or a map of the environment.

3. The method (100) of claim 1 or 2, wherein the failure of the ADS (212) comprises a failure of one or more sensors of the vehicle (210), and/or of other hardware of the ADS (212).

4. The method (100) of claim 3, wherein the method further comprises using sensor data of one or more remaining properly working sensors for executing the emergency halt or deviating from the emergency halt according to the information on the emergency halt to avoid risks indicated by the sensor data of the remaining properly working sensors.

5. The method (100) of any one of the preceding claims, wherein the information on the emergency halt comprises at least one trajectory (252A, 252B, 254B) for the vehicle (210) to an end location for the emergency halt.

6. The method (100) of claim 5, wherein the information on the emergency halt comprises a plurality of trajectories (252A, 252B, 254B) for the vehicle (210) from a regular driving path to the location for the emergency halt.

7. The method (100) of claim 6, wherein a distance between start points of the trajectories (252A, 252B, 254B) on the regular driving path is equal or less than a predefined distance.

8. The method (100) of any one of the preceding claims, wherein the information on the emergency halt comprises information on a plurality of possible emergency halts.

9. The method (100) of claim 8, wherein the information on the plurality of possible emergency halts comprises information on a respective risk of the emergency halts.

10. The method (100) of claim 9, wherein the method (100) further comprises selecting one out of the plurality of possible emergency halts for stopping the vehicle (210) from the plurality of possible emergency halts based on the information on their risk.

11. The method (100) of claim 10, wherein the information on the risk comprises information on a risk for maneuvering to an end location (250A, 250B) of a respective emergency halt and/or information on a risk of a collision after stopping the vehicle (210) at the end location (250A, 250B).

12. The method (100) of any one of the preceding claims, wherein providing the information comprises providing the information on the emergency halt to a control system which is separate from the ADS (212) and configured for maneuvering the vehicle (210).

13. A computer program comprising instructions which, when the computer program is executed by a computer, cause the computer to carry out a method (100) of any one of the preceding claims.

14. An apparatus (300) for an autonomous or assisted driving system (212), ADS, the apparatus (300) comprising:
one or more interfaces (310) for communication; and
a data processing circuit (320) configured to execute the method (100) of any one of the claims 1 to 12.

15. A vehicle (210) comprising an apparatus (300) according to claim 14.
